Europäisches Patentamt

European Patent Office

Office européen des brevets

(19)

(11) **EP 1 478 171 A1**

(12) **EUROPEAN PATENT APPLICATION**

(43) Date of publication:
**17.11.2004 Bulletin 2004/47**

(51) Int Cl.[7]: **H04N 3/15**, H04N 5/335

(21) Application number: **03425298.1**

(22) Date of filing: **12.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **ISTITUTO TRENTINO DI CULTURA**<br>**38100 Trento (IT)**<br><br>(72) Inventors:<br> • **Massari, Nicola**<br>   **I-38057 Pergine Valsugana(Trento) (IT)** | • **Gottardi, Massimo**<br>  **I-38100 Trento (IT)**<br>• **Gonzo, Lorenzo**<br>  **I-38051 Borgo Valsugana (Trento) (IT)**<br>• **Simoni, Andrea**<br>  **I-38070 Montagne (Trento) (IT)**<br><br>(74) Representative: **Quinterno, Giuseppe et al**<br>  **Jacobacci & Partners S.p.A.,**<br>  **Corso Regio Parco, 27**<br>  **10152 Torino (IT)** |

(54) **A light-sensitive pixel and an integrated vision sensor comprising a plurality of shuch pixels**

(57)    The pixel (Pij) comprises:

a light-sensitive device (PD) suitable for providing an output signal indicative of the intensity of the luminous radiation incident thereon, and a settable and resettable processing circuit having an input (I) connectible to the output of the light-sensitive device (PD) and an output (O). The processing circuit (CU) is suitable for amplifying the variations of the input signal (Vs) which have a predetermined sign and for storing successive variations of the input signal (Vs) having the said sign so that, upon completion of a step included between a setting operation and a resetting operation, the processing circuit (CU) can output a signal (Vout) indicative of the sum of the absolute values of the variations of the input signal (Vs) having the said sign.

FIG. 1

EP 1 478 171 A1

# Description

The present invention relates to a light-sensitive pixel and to an integrated vision sensor which can advantageously be produced by CMOS technology, with integrated image-processing electronics.

The processing of images in space and in real time is of considerable interest for various applications such as intelligent vision, driving aids, robotics, etc.

Image-processing algorithms involve a high computational load and therefore require suitable dedicated architectures for their execution in real time.

The object of the present invention is to propose an improved light-sensitive pixel for an integrated vision sensor.

This object is achieved according to the invention by the light-sensitive pixel the main characteristics of which are defined in appended Claim 1.

A vision sensor comprising a two-dimensional matrix of such pixels also falls within the scope of the invention.

Further characteristics and advantages of the invention will become clear from the following detailed description which is given purely by way of non-limiting example with reference to the appended drawings, in which:

Figure 1 is a circuit diagram of a light-sensitive pixel according to the invention,

Figure 2 is a schematic representation of a kernel of 3x3 pixels,

Figure 3 is a circuit diagram useful for understanding the operating principle of a portion of the circuitry of the pixel according to Figure 1,

Figure 4 is a series of time graphs which show the behaviour of some signals in the circuit of Figure 3 as functions of time which is given on the abscissa, and

Figures 5 to 9 are time graphs relating to different operative procedures that can be implemented with a light-sensitive pixel according to the invention.

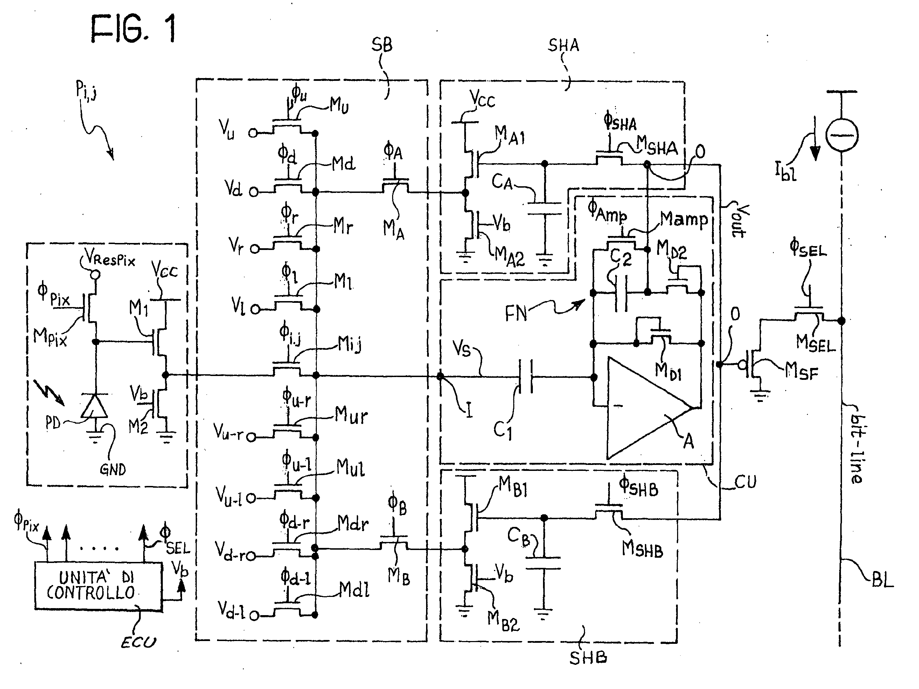

With reference to Figure 1, a light-sensitive pixel for an integrated vision sensor comprises a light-sensitive device and, in particular, a photodiode PD. The photodiode has its anode connected to the earth GND and its cathode is connectible to a source of a reference voltage $V_{RESPIX}$ (pixel reset voltage) by means of a CMOS transistor $M_{PIX}$ controlled by means of a signal $\phi_{PIX}$ applied to its gate.

When the signal $\phi_{PIX}$ is at level H (high), the output or cathode of the photodiode PD is forced to the voltage $V_{RESPIX}$, irrespective of the luminous intensity incident on the photodiode. When the signal $\phi_{PIX}$ is at level L (low), the voltage at the cathode of the photodiode PD varies substantially proportionally with the luminous intensity of the radiation incident on the photodiode.

The cathode of the photodiode PD is also connected to the gate of a transistor M1 which is connected in series with a further transistor M2 between a source of a biasing voltage $V_{CC}$ and earth. A control signal Vb is applied to the gate of the transistor M2 in operation.

A block or group of controlled electronic switches, advantageously constituted by CMOS transistors, is generally indicated SB in Figure 1.

This block of switches SB comprises, in particular, a transistor Mij, operatively controlled by means of a gate signal $\phi_{ij}$ and interposed between the common terminal of the transistors M1 and M2 and the input of a processing circuit CU the structure and functions of which will be described in greater detail below.

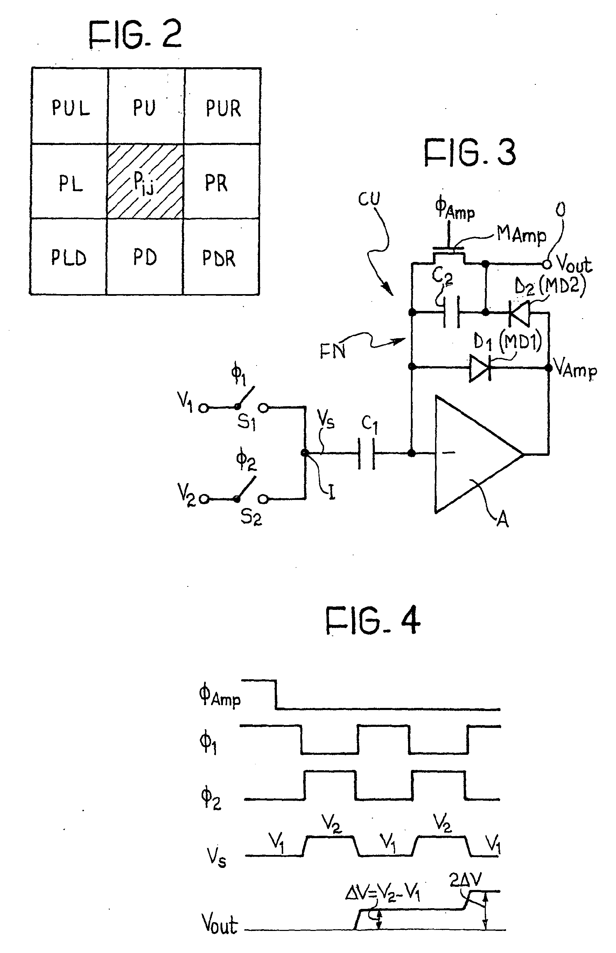

As will become clear from the following description, the light-sensitive pixel according to the invention is intended for use in an integrated vision sensor which comprises a plurality of such light-sensitive pixels arranged in a matrix. If a specific pixel in an integrated vision sensor of this type is indicated Pij, eight pixels are arranged around the pixel Pij, together forming a kernel of 3x3 pixels, as shown schematically in Figure 2. In this figure, the eight adjacent pixels, that is, those surrounding the generic light-sensitive pixel Pij, are indicated Pul (up-left), Pu (up), Pur (up-right), Pr (right), Pdr (downright), Pd (down), Pld (left-down), and Pl (left).

The outputs of the light-sensitive elements of the pixels adjacent or surrounding the generic pixel Pij can be connected to the input of the processing circuit CU of the pixel Pij by means of respective transistors of the block SB (Figure 1) which are indicated Mu, Md, Mr, Ml, Mur, Mul, Mdr and Mdl and the gates of which are operatively controlled by means of respective control signals indicated $\phi$ with corresponding subscripts. In Figure 1, the output voltages of the light-sensitive elements associated with the various pixels (Pu, Pur ...) surrounding the pixel Pij are indicated V with corresponding subscripts ($V_u$, $V_{ur}$ ...).

The processing circuit CU comprises an amplification network with switched capacitors including an amplifier A, an input capacitor C1 connected between the inverting input of the amplifier A and the common terminal of the transistors of the block SB, and a feedback network, generally indicated FN. This network comprises a transistor MD1 connected as a diode between the inverting input and the output of the amplifier A. A capacitor C2 and a second transistor MD2 connected as a diode, are connected in series with one another in parallel with the transistor MD1. The transistors MD1 and MD2 may be NMOS transistors.

A transistor Mamp, the gate of which operatively receives a set/reset signal $\phi_{amp}$, is arranged in parallel with the capacitor C2.

The common terminal of the capacitor C2 and of the transistor MD2 represents the output O of the entire amplifier network or processing circuit CU.

In Figures 1 and 3, the input signal I of the processing circuit CU is generically indicated Vs. In the basic diagram of Figure 3, the transistors MD1 and MD2 have been represented graphically by the symbols of corresponding diodes D1 and D2 of which the cathode and the anode, respectively, are connected to the output of the amplifier A.

The processing circuit CU of Figures 1 and 3 is such that it amplifies solely negative variations (decrements) of the voltage Vs applied to its input I. It is also able to store successive negative variations of the input signal Vs over a predetermined period of time, at the end of which the signal at the output O is indicative of the sum of the absolute values of the negative variations of the voltages applied to its input.

In operation, the diode D1 (MD1) provides feedback in the event of positive variations of the input signal ($\Delta$Vs > 0). The capacitor C2 in series with the diode D2 (MD2) provides feedback in the event of negative variations of the input signal ($\Delta$Vs < 0). The capacitor C1 together with the capacitor C2 confers on the amplifier network of the processing circuit CU a gain G = -C1/C2.

The reset transistor Mamp enables the amplifier network CU to be reset by bringing the charge previously stored in the capacitor C2 to zero.

The processing circuit CU of Figures 1 and 3 operates substantially in the manner which will now be described with particular reference to Figure 3.

When the signal $\phi_{amp}$ is at level L (low) the amplifier network CU "reads" purely the negative variations of the voltage of the input signal Vs. A negative variation, that is a decrement, of the input signal $V_S$ produces a positive variation of the output signal Vout:

$$\Delta Vout = G\Delta Vs = -\frac{C1}{C2}(V_1 - V_2) \, per \Delta Vs = (V_1 - V_2) < 0$$

The variation $\Delta$Vout is added to the initial value of the output voltage Vout.

A positive variation, that is an increment, of the input voltage Vs, however, does not produce any variation in the output voltage Vout:

$$\Delta Vout = 0 \text{ for } \Delta Vs = (V_1 - V_2) > 0$$

and in this case the output voltage Vout remains unchanged at the initial value.

With reference to Figure 3, the input voltage Vs at the input I of the processing circuit CU is set by means of the switches S1 and S2 which are driven by control signals $\phi$1 and $\phi$2. The instantaneous value of the output signal Vout is held at the terminals of the feedback capacitor C2 by virtue of the presence of the blocking diode D2 (MD2). The multiple or successive negative variations of the input signal Vs which occur in a period of time in which the signal $\phi_{amp}$ at the gate of the transformer Mamp is at level L (low) are added together and held in the capacitor C2, as is clear from the lower time graph of Figure 4. The operation thus performed is substantially the sum of the absolute values of the negative variations of the input voltage:

$$Vout = \sum_{1}^{N} \frac{C1}{C2} \left| V_1 - V_2 \right|$$

where N is a whole number selected as desired. In the specific case of the graphs shown in Figure 4, the number of storage cycles corresponds to N=2.

The set of time graphs of Figure 4 is self-explanatory to a person skilled in the art and will not therefore be described further.

With further reference to Figure 1, two sample and hold circuits, generally indicated SHA and SHB, are also associated with the light-sensitive pixel Pij. These circuits can sample and store values of the output signal Vout of the circuit CU and their outputs are selectively connectible to the input I of the circuit CU by means of respective transistors $M_A$ and $M_B$ controlled by respective gate signals $\phi_A$ and $\phi_B$.

The circuits SHA and SHB have identical structures. It will therefore suffice to describe below the structure of only one of them (SHA).

The sample and hold circuit SHA comprises a transistor $M_{SHA}$ connected between the output O of the processing circuit CU and a first plate of a capacitor $C_A$ the other plate of which is connected to the earth. The transistor $M_{SHA}$ is controlled by a gate signal $\phi_{SHA}$.

The non-earthed plate of the capacitor $C_A$ is connected to the gate of a transistor $M_{A1}$ which is connected in series with another similar transistor $M_{A2}$ between the source of the biasing voltage $V_{CC}$ and the earth. The common terminal of the transistors $M_{A1}$ and $M_{A2}$ is connectible to the input I of the processing circuit CU by means of the transistor $M_A$ already described.

The output O of the processing circuit CU is connected to the gate of a transistor $M_{SF}$ which is connected in series with a selection transistor $M_{SEL}$ between a bit-line BL and earth. The transistor $M_{SEL}$ is controlled by the gate signal $\phi_{SEL}$.

A generator of a current $I_{BL}$ is connected to the bit-line BL.

The various gate signals for the various transistors of the circuitry associated with the generic pixel Pij are emitted by an electronic control unit ECU (Figure 1).

As will become clearer from the following description, the block of driver switches SB enables the processing circuit or amplifier network CU of the pixel Pij to be interconnected with the adjacent pixels, enabling image processing algorithms to be performed on a kernel of 3x3 pixels. The analog memories SHA and SHB enable the value of the output voltage Vout to be held and enable this value to be applied to the input I of the network CU in order to perform signal-processing operations.

Some operative procedures will now be described.

Normal acquisition or reading of images

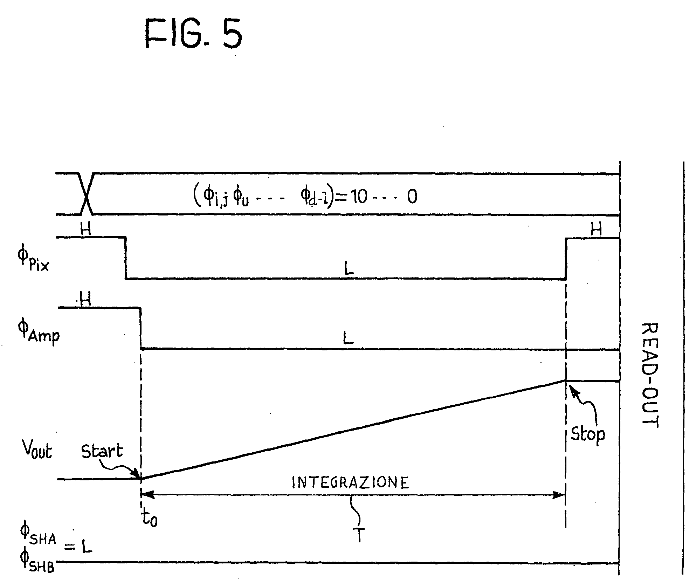

In this operative procedure, the pixel Pij is driven in the manner which will now be described with reference to the time graphs of Figure 5:

1) initially, the photodiode PD and the amplifier network CU are in the reset condition ($\phi_{PIX}$ = H, $\phi_{AMP}$= H); an integration step of duration T starts at a moment to; the integration step is started by the setting of the photodiode PD ($\phi_{PIX}$ = L) and then of the amplifier network CU ($\phi_{AMP}$ = L), in sequence;

2) during the integration step, the voltage at the terminals of the photodiode PD is reduced and is brought to the value corresponding to the intensity of the incident luminous radiation; the integration time T is defined by the period of time between the switching-off of the reset condition of the amplifier CU and the subsequent resetting of the pixel ($\phi_{PIX}$= H); by the forcing of the resetting of the pixel, the instantaneous value of the signal is frozen in the feedback capacitor C2 of the amplifier network CU; the pixel signal can therefore be read by switching on the selection transistor $M_{SEL}$;

3) once the pixel signal has been sampled, it is possible to proceed with the reading of the pixel (READ-OUT), which is characterized by a CDS operation per column and a DDS operation.

Image-edge extraction

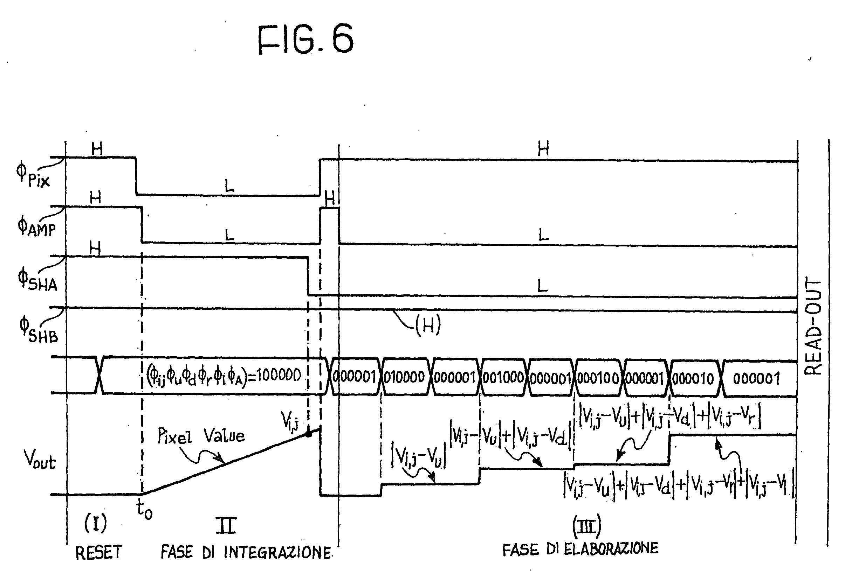

Figure 6 shows the time graphs relating to the operative procedure for extracting image edges, that is, the spatial gradient of the signal of the pixel Pij relative to adjacent pixels, for example, relative to the pixels Pu, Pr, Pd and Pl, respectively. In this case, the procedure is as follows:

1) initially, the photodiode PD and the amplifier network CU are in the reset condition ($\phi_{PIX}$= H, $\phi_{AMP}$ = H); then an integration step is started as described above by setting $\phi_{PIX}$ = L and then $\phi_{AMP}$ = L;

2) during the integration step, the voltage at the terminals of the photodiode PD is reduced;

3) upon completion of the integration step, the value of the signal Vout at the output of the amplifier network CU is stored (for example) in the analog memory circuit SHA, by setting the gate of the transistor $M_{SHA}$ to level L; the amplifier network CU is then reset ($\phi_{AMP}$= H) and the photodiode PD ($\phi_{PIX}$ = H) is thus also reset;

4) the integration step is followed by a processing step in which the amplifier network CU is caused to leave the reset condition and there are applied to its input I the signal Vij relating to the pixel Pij in question (previously stored in the memory (SHA) and, subsequently, those of the four adjacent pixels Pu, Pr, Pd and Pl, always returning to the reference pixel Pij, that is, the driving stages of these pixels are sent to level H=1 sequentially in accordance with the sequence indicated below:
$$\Phi_{ij} \to \Phi_u \to \Phi_{ij} \to \Phi_R \to \Phi_{ij} \to \Phi_D \to \Phi_{ij} \to \Phi_L$$

5) in general, the image-edge extraction operation may be performed on a complete kernel of 3x3 pixels (Figure 2), that is to say between the pixel Pij and the eight adjacent pixels, by selectively setting the driver steps to level H=1 in sequence, for example, in the following manner:
$$\Phi_{ij} \to \Phi_u \to \Phi_{ij} \to \Phi_{UR} \to \Phi_{ij} \to \Phi_R \to \Phi_{ij} \to \Phi_{DR} \to$$
$$\to \Phi_{ij} \to \Phi_D \to \Phi_{ij} \to \Phi_{DL} \to \Phi_{ij} \to \Phi_L \to \Phi_{ij} \to \Phi_{UL}$$
$$\to \Phi_{ij} ;$$
a similar procedure or sequence may also be performed between the pixel Pij and an arbitrary subset of adjacent pixels in order thus to extract the edge of the image along a specific axis or set of axes; the axes along which it is possible to determine the edge are 0°±45°, ±90°, ±135°; the edge-extraction operation can be implemented an arbitrary number of times, for example, k times; to do this, it suffices to apply the sequence of desired pixels to the input I of the amplifier network CU k times, by suitable operation of the switches of the block SB. By way of example, to extract the edge between the pixels Pij and Pd for a number k=3, it is necessary to perform the sequence:
$$\Phi_{ij} \to \Phi_u \to \Phi_{ij} \to \Phi_u \to \Phi_{ij} \to \Phi_u \to \Phi_{ij} ;$$

6) The matrix is then read (READ-OUT).

Detection of image movement

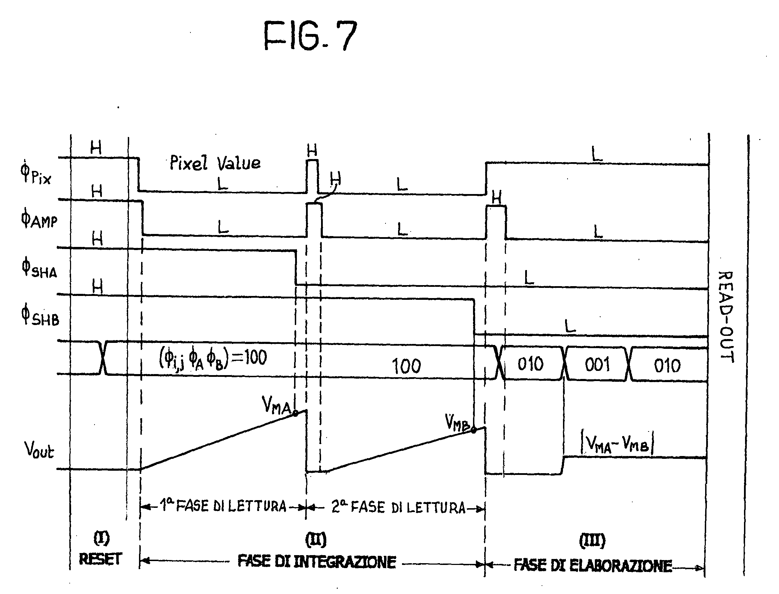

With reference to the time graphs of Figure 7, the movement of an image can be detected in the following manner:

1) initially, the photodiode PD and the amplifier network CU are in the reset condition ($\phi_{PIX}$= H, $\phi_{AMP}$= H); an integration step which comprises two successive reading steps is started by resetting the photodiode and then the amplifier network, in sequence;

2) upon completion of the first reading step, the value $V_{MA}$ reached by the output voltage Vout is stored in the memory SHA ($\phi_{SHA}$ = L);

3) the second reading step then starts;

4) upon completion of the second reading step, the value $V_{MB}$ reached by the output voltage Vout is stored in the memory SHB ($\phi_{SHB}$ = L) ;

5) a processing step then follows: the amplifier network CU is released from the reset condition immediately after the signal $V_{MA}$ stored in the memory SHA has been applied to its input I, then the value $V_{MB}$ of the signal stored in the memory SHB is applied to the input of the amplifier network and, finally, the signal stored in the memory SHA is applied to the input of the amplifier network again, implementing the following sequence as a whole:
$$\Phi_A \rightarrow \Phi_B \rightarrow \Phi_A$$
The final voltage Vout at the output of the amplifier network is thus proportional to the absolute value of the variation in luminous intensity between the sampled values $V_{MA}$ and $V_{MB}$ in the memories SHA and SHB;

6) the matrix is then read (READ-OUT).

Image amplification

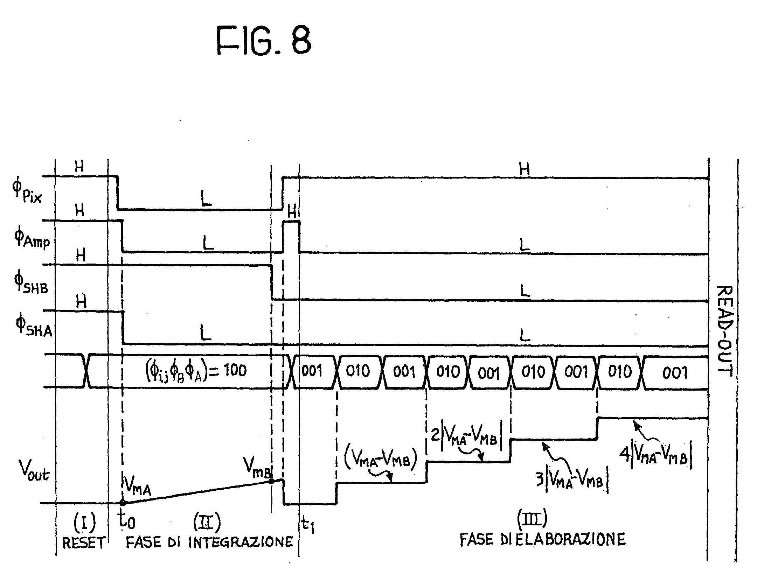

When the image has a low level of luminosity, the luminosity can be amplified electrically by multiplying the variation of the signal integrated in the capacitor C2 of the amplifier network a suitable number of times. With reference to the time graphs of Figure 8, this operative procedure is implemented substantially in the following manner:

1) after the resetting of the amplifier network CU has been deactivated ($\phi_{AMP}$ = L), the value $V_{MA}$ of the output signal Vout is acquired and stored in one of the two memories (for example, the memory SHA);

2) an integration step is then performed, upon completion of which the instantaneous value $V_{MB}$ of the output signal Vout is stored in the other memory SHB;

3) there follows a processing step which starts with the release of the amplifier network from the reset condition (moment $t_1$) immediately after the value of the signal $V_{MA}$ stored in the memory SHA has been applied to its input I; the value of the signal stored in the memory SHB is then applied to the input of the amplifier network and, finally, the value stored in the memory SHA is applied to the input I again, in accordance with the sequence:
$$\Phi_A \rightarrow \Phi_B \rightarrow \Phi_A$$

This operation is repeated a suitable number of times so as to amplify the value of the signal Vout at the output of the amplifier network to the desired levels;

4) finally, the matrix is read (READ-OUT).

High-range operation

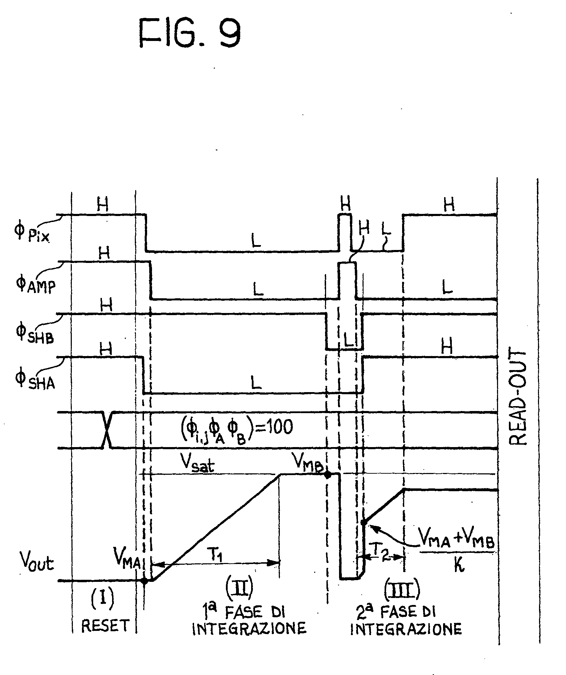

High-range operation provides for driving in accordance with the time graphs of Figure 9, that is:

1) initially, the photodiode PD and the amplifier network CU are in the reset condition ($\phi_{PIX}$ = H, ($\phi_{AMP}$ = H); there then follows a first integration step of duration T1 which is started by the switching-off of the reset signals in sequence ($\phi_{PIX}$ = L, and then $\phi_{AMP}$ = L); at the start of the first integration step, the value $V_{MA}$ of the output signal Vout is stored, for example, in the memory SHA;

2) upon completion of the first integration step, the value $V_{MB}$ reached by the signal Vout is stored in the other of the two memories, SHB;

3) the photodiode PD and the amplifier network CU are then reset ($\phi_{PIX}$ = $\phi_{AMP}$ = H);

4) the photodiode PD, and subsequently also the amplifier network, are then released from the reset condition;

5) at the start of the second integration step (T2), the memories SHA and SHB containing the values $V_{MA}$ and $V_{MB}$ are short-circuited to the output of the amplifier network CU, thus forcing a redistribution of charge so that the output signal Vout adopts a value $(V_{MA}+V_{MB})/k$, where k is a coefficient dependent on the values of the capacitances $C_2$, $C_A$, $C_B$ of Figure 1;

6) upon completion of the second integration step ($\phi_{PIX}$ = H) the final output signal Vout has a range equal to the ratio T1/T2 (T1 > T2) between the two integration times used, T1 and T2;

7) the matrix is then read (READ-OUT).

Naturally, the principle of the invention remaining the same, the forms of embodiment and details of construction may be varied widely with respect to those described and illustrated purely by way of non-limiting example, without thereby departing from the scope of the invention as defined in the appended claims.

**Claims**

1. A light-sensitive pixel (Pij) for an integrated vision sensor, comprising:

   a light-sensitive device (PD) suitable for providing an output signal indicative of the intensity of the luminous radiation incident thereon, and

   settable and resettable processing circuit means (CU) having an input (I) connectible to the output of the light-sensitive device (PD) and an output (O), the processing means (CU) being suitable for amplifying the variations of the input signal (Vs) which have a predetermined sign and for storing successive variations of the input signal (Vs) having the said sign so that, upon completion of a step included between a setting operation and a resetting operation, the processing means can output a signal (Vout) indicative of the sum of the absolute values of the variations of the input signal (Vs) having the said sign.

2. A light-sensitive pixel according to Claim 1, further comprising sample and hold circuit means (SHA, SHB) which are suitable for sampling and storing values of the signal (Vout) at the output (O) of the processing circuit means (CU) and the output of which is selectively connectible to the input (I) of the processing circuit means (CU).

3. A light-sensitive pixel according to Claim 1 or Claim 2 in which the processing circuit means (CU) comprise an amplifier network with switched capacitors (C1, C2).

4. A light-sensitive pixel according to any one of the preceding claims, comprising setting/resetting circuit means ($M_{PIX}$) which, in the reset condition, can force the output of the light-sensitive device (PD) to a predetermined voltage ($V_{RESPIX}$) , and wherein the processing circuit means (CU) are suitable for amplifying and storing the negative variations, that is the decrements, of the signal (Vs) presented to their input (I).

5. A pixel according to Claims 3 and 4 in which the amplifier network (CU) comprises an amplifier (A) and an associated feedback network (FN) including:

   first diode means (D1; MD1) suitable for providing a feedback when positive variations of the input signal (Vs) occur,

   an input capacitor (C1) connected to the inverting input of the amplifier (A),

   a feedback capacitor (C2) connected in series with second diode means (D2; MD2) suitable for providing a feedback when negative variations of the input signal (Vs) occur, the feedback capacitor (C2) together with the input capacitor (C1) determining the gain (G = -C1/C2) of the amplifier network (CU), and

   a reset switch (Mamp) connected in parallel with the feedback capacitor (C2).

6. A pixel according to any one of the preceding claims for an integrated vision sensor comprising an array or matrix of pixels adjacent one another, the pixel (Pij) comprising controlled electronic switching means (Mij; Mu-Mdl) suitable for selectively connecting the output of the light-sensitive device (PD) of the pixel (Pij), or the output of the light-sensitive device of a (each) adjacent pixel (Pu-Pdl), to the input (I) of the processing means (CU).

7. A pixel according to any one of the preceding claims, further comprising control circuit means (ECU) arranged to implement an operative procedure for the reading or acquisition of the signal of the light-sensitive device (PD) of the pixel (Pij), in which the output of the light-sensitive device (PD) is initially forced to a predetermined reference voltage whilst the processing means (CU) are reset and then the processing means (CU) are set for a predetermined period of time at the end of which the final value reached by the signal (Vout) at the output (O) of the processing means (CU) is acquired.

8. A pixel according to Claims 2 and 7, in which the control circuit means (CU) are arranged to implement an operative procedure for the extraction of image edges, including:

   a step for the reading of the signal of the light-sensitive device (PD) of the pixel (Pij), upon completion of which the value of the signal (Vij) at the output of the processing circuit means (CU) is acquired in a sample and hold means (SHA) and the light-sensitive device (PD) of the pixel (Pij) and the processing means (CU) are reset, and

   a subsequent processing step in which the processing means (CU) are set and the value of the signal (Vij) of the pixel (Pij) sampled and stored upon completion of the above-mentioned reading step, and then the signal (Vu ...) of the light-sensitive device of a preselected adjacent pixel (Pu ...), are applied to the input (I) of the processing means (CU) so that the signal (Vout) at the output of the processing means (CU) becomes indicative of the absolute value of the difference between the signal $(V_{ij})$ of the pixel $(P_{ij})$ sampled and stored in the reading step and the signal $(V_u ...)$ of the adjacent pixel $(P_u ...)$.

**9.** A pixel according to Claim 8 in which the processing step comprises a plurality of successive sub-steps in each of which the value $(V_{ij})$ of the signal of the pixel $(P_{ij})$ sampled and stored upon completion of the reading step and the signal $(V_u ..)$ of the light-sensitive device of a different preselected adjacent pixel $(P_u ..)$ are applied alternately to the input (I) of the processing means (CU).

**10.** A pixel according to Claim 8 or Claim 9 in which the control circuit means (ECU) are arranged to implement an operative procedure for the detection of image movements, comprising:

a first step and a second step for the reading of the signal $(V_{MA}, V_{MB})$ of the pixel $(P_{ij})$, upon completion of which steps the value of the signal (Vout) at the output of the processing circuit means (CU) is acquired in a first and in a second sample and hold means (SHA, SHB), respectively, and

a subsequent processing step in which the values $(V_{MA}, V_{MB})$ of the signal sampled and stored in the first and second reading steps, respectively, are applied to the input (I) of the processing means (CU) in succession, and then the value $(V_{MA})$ sampled and stored in the first reading step is applied to the input of the processing means (CU) again.

**11.** A pixel according to Claim 10 in which the control circuit means (ECU) are arranged to implement an image-amplification operative procedure comprising:

a reading step in which an initial value $(V_{MA})$ and a final value $(V_{MB})$ of the output signal (Vout) of the processing means (CU) are detected and stored, and
a subsequent processing step in which the initial value $(V_{MA})$, then the final value $(V_{MB})$, and then the initial value $(V_{MA})$ again, are applied to the input (I) of the processing means (CU).

**12.** A pixel according to Claim 11 in which the control circuit means (ECU) are arranged to implement a high-range operative procedure comprising:

a first integration or reading step (T1) upon completion of which the value $(V_{MB})$ reached by the signal (Vout) at the output (O) of the processing means (CU) is stored in a memory device (SHA or SHB),

an intermediate step in which the light-sensitive device (PD) of the pixel is reset,

a second integration or reading step during which the output (O) of the processing means (CU) is short-circuited to the memory means (SHA or SHB) so as to force a redistribution of charge.

**13.** An integrated vision sensor comprising a plurality of pixels according to one or more of the preceding claims.

FIG. 1

# FIG. 2

| PUL | PU | PUR |
|-----|-----|-----|
| PL | $P_{ij}$ | PR |
| PLD | PD | PDR |

# FIG. 3

# FIG. 4

FIG. 5

FIG.6

READ-OUT

$\phi_{Pix}$  H  L  H

$\phi_{AMP}$  H  L  L

$\phi_{SHA}$  H  L  L

$\phi_{SHB}$  (H)

$(\phi_{i,j}\phi_u\phi_d\phi_r\phi_l\phi_A)=100000$

000001  010000  000001  001000  000001  000100  000001  000010  000001

$V_{i,j}$

Pixel Value

$V_{out}$

$t_0$

$|V_{i,j}-V_u|$

$|V_{i,j}-V_u|+|V_{i,j}-V_d|$

$|V_{i,j}-V_u|+|V_{i,j}-V_d|$

$|V_{i,j}-V_u|+|V_{i,j}-V_d|+|V_{i,j}-V_r|$

$|V_{i,j}-V_u|+|V_{i,j}-V_d|+|V_{i,j}-V_r|+|V_{i,j}-V_l|$

(I) RESET  II FASE DI INTEGRAZIONE  (III) FASE DI ELABORAZIONE

# FIG. 7

EP 1 478 171 A1

FIG. 8

READ-OUT

$\phi_{Pix}$  $\phi_{Amp}$  $\phi_{SHB}$  $\phi_{SHA}$  $V_{out}$

$(\phi_{i,j}\phi_B\phi_A) = 100$

001  010  001  010  001  010  001  010  001

$V_{mA}$  $V_{mB}$

$(V_{mA}-V_{mB})$  $2|V_{mA}-V_{mB}|$  $3|V_{mA}-V_{mB}|$  $4|V_{mA}-V_{mB}|$

$t_0$  $t_1$

(I) RESET  (II) FASE DI INTEGRAZIONE  (III) FASE DI ELABORAZIONE

FIG. 9

European Patent
Office

**EUROPEAN SEARCH REPORT**

Application Number

EP 03 42 5298

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 166 367 A (CHO KWANG-BO AUSTIN) 26 December 2000 (2000-12-26) * column 2, line 1 - line 10 * * column 7, line 2 - line 19 * --- | 1-3 | H04N3/15 H04N5/335 |
| X | US 5 420 629 A (WATANABE TAKASHI) 30 May 1995 (1995-05-30) * column 3, line 64 - column 4, line 15 * --- | 1 | |
| X | US 5 166 800 A (MORI TAKESHI ET AL) 24 November 1992 (1992-11-24) * column 5, line 26 - line 34 * * column 6, line 46 - line 52 * ----- | 1 | |
| | | | **TECHNICAL FIELDS SEARCHED (Int.Cl.7)** H04N |

The present search report has been drawn up for all claims

| Place of search | Date of completion of the search | Examiner |
|---|---|---|
| THE HAGUE | 29 September 2003 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 42 5298

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2003

| Patent document cited in search report | | Publication date | Patent family member(s) | | Publication date |
|---|---|---|---|---|---|
| US 6166367 | A | 26-12-2000 | NONE | | |
| US 5420629 | A | 30-05-1995 | JP | 2662455 B2 | 15-10-1997 |
| | | | JP | 4122178 A | 22-04-1992 |
| | | | DE | 69114643 D1 | 21-12-1995 |
| | | | EP | 0476936 A2 | 25-03-1992 |
| US 5166800 | A | 24-11-1992 | JP | 2993701 B2 | 27-12-1999 |
| | | | JP | 3274960 A | 05-12-1991 |
| | | | JP | 2833825 B2 | 09-12-1998 |
| | | | JP | 4004684 A | 09-01-1992 |

For more details about this annex : see Official Journal of the European Patent Office, No. 12/82